# EUROPÄISCHE PATENTSCHRIFT

(11) **EP 2 424 762 B1**
(45) Veröffentlichungstag und Bekanntmachung des Hinweises auf die Patenterteilung: **12.08.2015**
(21) Anmeldenummer: 10721665.7
(22) Anmeldetag: 28.04.2010
(51) Int. Cl.: B62B 3/00, B62B 3/02, B62B 3/16

(54) **VORRICHTUNG FÜR DEN TRANSPORT VON BÜHNENAUSRÜSTUNGEN**
APPARATUS FOR TRANSPORTING STAGE EQUIPMENT
DISPOSITIF DE TRANSPORT D'ÉQUIPEMENTS DE SCÈNE

(30) Priorität: 28.04.2009 DE 202009006263 U
(43) Veröffentlichungstag der Anmeldung: 07.03.2012
(73) Patentinhaber: Late Night Concepts Veranstaltungsproduktion GmbH & Co. KG, 59368 Werne (DE)
(72) Erfinder: KAISER, Ingo, 44534 Lünen (DE)
(74) Vertreter: Behrendt, Arne
(86) Internationale Anmeldenummer: PCT/EP2010/002596
(87) Internationale Veröffentlichungsnummer: WO 2010/124852

(56) Entgegenhaltungen:
- EP-B1- 0 586 088
- BE-A- 419 393
- DE-U1-202004 007 736
- GB-A- 2 169 873
- GB-A- 2 236 719
- US-A- 1 367 672
- US-A- 1 957 656

## Beschreibung

Die Erfindung betrifft eine Vorrichtung für den Transport und/oder die Lagerung von Bühnenausrüstungen, insbesondere von veranstaltungstechnischen Materialien, bestehend aus einem auf Laufrollen verfahrbaren, quaderförmigen Stapelbehälter, der einen mit den Laufrollenträgern verbundenen Rahmen sowie einen Boden, zwei Seitenwände, eine Vorderwand, eine Rückwand und einen Deckel aufweist, wobei der Rahmen von entlang den Kanten des Behälters verlaufenden, an den Ecken des Behälters miteinander verbundenen Profilstäben gebildet wird und durch in den Ecken des Rahmens eingesetzte Eckenversteifungsbleche versteift ist, und die Profilstäbe jeweils Aufnahmerahmen bilden, in welche der Boden, die beiden Seitenwände, die Vorderwand, die Rückwand und der Deckel des Behälters eingesetzt sind.

Eine derartige Vorrichtung ist aus der DE 20 2004 007 736 U1 bekannt. Bei dieser bekannten Vorrichtung sind alle Wände, der Boden und der Deckel mit dem den Rahmen bildenden Profilstäbe zum Zwecke der Befestigung vernietet, und deshalb unlösbar mit diesem verbunden.

Ein ähnlicher Transportbehälter, allerdings ohne Deckel, ist aus der BE 419 393 A bekannt. Dort sind der obere horizontale Rahmen und der untere horizontale Rahmen aus U-Profilen hergestellt, zwischen deren Schenkeln die aus Gittern hergestellten Seitenwände festgehalten werden, um besonders stabil - allerdings auch nicht herausnehmbar - an dem Rahmen fixiert zu werden.

Schließlich ist aus der EP 0 586 088 B1 ein auf Laufrollen verfahrbarer Stapelbehälter bekannt, der als großformatiger, allseitig geschlossener Koffer aus Kunststoff ausgebildet und zum Schutz gegen Stöße dicke, hohl ausgebildete und mit Versteifungssicken versteifte Wände aus Kunststoff aufweist, die an ein durch einen Verstärkungsrahmen verstärktes Unterteil - ebenfalls aus Kunststoff - angeformt sind. An dem aus Lochblechstreifen bestehenden, in das Unterteil eingeformten Verstärkungsrahmen sind die Laufrollenträger angebracht. Dieser Aufbau des Stapelbehälters erfordert ersichtlich einen großen Fertigungsaufwand. Außerdem benötigt der so ausgebildete Stapelbehälter aufgrund der dicken Hohlwände unnötig viel Stauraum. Schließlich müssen bei diesen Stapelbehälter die Wände des Stapelbehälters das Gewicht des gesamten Stapels tragen und dementsprechend stabil und schwer ausgeführt werden. Bei Beschädigungen ist ein solcher aus Kunststoff bestehender Koffer auch nur schlecht zu reparieren.

Es ist Aufgabe der Erfindung, eine Vorrichtung der eingangs genannten Art zu schaffen, die leichtbauend und stabil ist und darüber hinaus mit auf einfache Weise herausnehmbarer bzw. einsetzbarer Vorderwand bzw. Rückwand versehen ist.

Zur Lösung dieser Aufgabe schlägt die Erfindung eine Vorrichtung mit den in Patentanspruch 1 genannten Merkmalen vor.

Bei der Vorrichtung gemäß der Erfindung wird zum Einsetzen die Oberkante der Vorderwand bzw. der Rückwand von unten zwischen die längeren freien Schenkel der oberen U-Profile geschoben und danach die Unterkante der Vorderwand bzw. der Rückwand von oben zwischen die Schenkel der oberen U-Profile abgesenkt. Auf diese Weise werden die Vorderwand bzw. die Rückwand beim Einbau durch ihr Eigengewicht in der Einbaustellung verriegelt. Zum Ausbau wird zunächst die Unterkante der Vorderwand bzw. der Rückwand aus dem untern U-Profil herausgezogen und sodann die Oberkante aus den oberen Profilen herausgezogen. Der Ein- und Ausbau der Vorderwand bzw. der Rückwand erfolgt somit auf äußerst einfache Art und Weise ohne Zuhilfenahme eines Werkzeugs.

Bei dem Stapelbehälter gemäß der Erfindung hat nur der aus den Stahlprofilen und den Eckverstärkungsblechen bestehende Rahmen eine tragende Funktion. Alle anderen Teile, nämlich der Boden, die Seitenwände, die Vorderwand, die Rückwand und der Deckel haben keine tragende Funktion, sondern nur eine Schutzfunktion und können deshalb dieser Funktion entsprechend ausgestaltet werden, z. B. aus leichten, wasserbeständig ausgerüsteten Schichtholzplatten oder anderen noch leichteren Materialien. Diese Platten können im Falle einer Beschädigung auch ohne weiteres leicht ausgetauscht werden. Insgesamt ist der Stapelbehälter gemäß der Erfindung aufgrund der stabilen Rahmenkonstruktion aus Stahlprofilen besonders leicht, einfach herzustellen, benötigt wenig Stauraum und ist leicht reparabel.

Eine besonders bevorzugte Ausführungsform der Erfindung sieht vor, dass die entlang den Kanten des Behälters verlaufenden Stahlprofile des Rahmens als Vierkantprofile mit außen abgerundeten Ecken ausgebildet sind. Solche Vierkantprofile ergänzen im Bereich der Kanten die Quaderform des Behälters, so dass sich allseitig weitestgehend glatte Oberflächen des Behälters ergeben, was bei enger Anordnung neben- und übereinander der Behälter von großem Nutzen ist. Dennoch sind die nach außen weisenden Kanten nicht scharfkantig.

Zweckmäßig sind die Stahlprofile des Rahmens an den Ecken des Behälters miteinander und mit den in den Ecken angeordneten Eckversteifungsblechen verschweißt. Ein solcher Rahmen in Schweißkonstruktion ist äußerst stabil und hat keinerlei störende, nach außen stehende Vorsprünge, wie dies bei Schraub- oder Nietverbindungen der Fall wäre.

Zur besseren Abstützung von Boden und Deckel des Behälters sind die Aufnahmerahmen für den Boden und den Deckel zusätzlich durch sich über den Flächenbereich des Aufnahmerahmens erstreckende Stützprofile verstärkt. Dabei kreuzen sich zweckmäßig zwei Stützprofile in der Mitte des zugehörigen Aufnahmerahmens.

Weiterhin ist vorgesehen, dass die Aufnahmerahmen für die Seitenwände mit parallel mit Abstand zueinander verlaufenden, horizontal angeordneten L-Profilen versehen, deren waagerecht verlaufende Schenkel als Auflageflächen für in den Behälter einschiebbare Zwischenböden, Schubladen oder Sonderzubehör dienen. Solche Zwischenböden, Schubladen oder Sonderzubehör unterteilen den Innenraum des Behälters den Erfordernissen entsprechend oder machen es möglich, die in den Behälter eingelagerten Gegenstände innerhalb des Behälters zu fixieren.

Der Boden, die Seitenwände, die Vorderwand, die Rückwand und der Deckel des Behälters bestehen zweckmäßig aus wasserbeständig ausgerüsteten Schichtholzplatten. Solche Schichtholzplatten sind leicht, stoßfest und wasserbeständig und können mit einfachen Bearbeitungswerkzeugen wie z. B. Bohrern, Stichsägen oder dergleichen bearbeitet werden, was insbesondere bei der Reparatur oder bei der individuellen Anpassung der Platten an besondere Bedürfnisse nützlich ist.

Die in die seitlichen Aufnahmerahmen eingesetzten Seitenwände und der in den unteren Aufnahmerahmen eingesetzte Boden werden zu Ihrer Fixierung zweckmäßig mit den Eckversteifungsblechen verschraubt. Eine solche Schraubverbindung kann im Bedarfsfall leicht gelöst werden, um die Platten im Bedarfsfall auf einfache Art und Weise auswechseln zu können.

Für die stabile Verlagerung der Laufrollenträger sind diese mit den Eckversteifungsblechen des unteren Aufnahmerahmens verschraubt. Auch diese Schraubverbindung ermöglicht im Bedarfsfall ein schnelles Auswechseln der Laufrollenträger. Dadurch, dass die Laufrollenträger über die Eckversteifungsbleche unmittelbar mit dem Rahmen verbunden sind, werden die Stützkräfte der Laufrollenträger unmittelbar in den Rahmen eingeleitet, ohne die Wände des Behälters sonst zu belasten.

Um beim Übereinanderstapeln der Behälter alle Wände von den durch die Übereinanderstapelung verursachten Belastungen frei zu halten, ist vorgesehen, dass der oben in den oberen Aufnahmerahmen eingesetzte Deckel die Eckversteifungsbleche des oberen Aufnahmerahmens ganz oder teilweise als Standfläche für die Laufrollen eines darüber gestapelten Behälters frei lässt. Hierdurch wird sichergestellt, dass alle bei der Stapelung auftretenden Kräfte nur die Rahmen, die Laufrollen und die Laufrollenträger, nicht aber die Wände der Behälter belasten.

Um sicherzustellen, dass die Behälter leicht von Hand gegriffen und verschoben werden können, ist weiterhin vorgesehen, dass die Seitenwände mit verschließbaren Hand-Eingriffsöffnungen versehen sind.

In die waagerechten Schenkel der L-Profile ist zweckmäßig ein als Sonderzubehör dienendes Traggestell einschiebbar, welches parallel zueinander verlaufende Tragstangen zum Aufhängen von Leuchten oder Kabeln aufweist. Vorzugsweise hat dieses Traggestell zwei oder vier Tragstangen.

Ein weiterer Sonderzubehör besteht in gesonderten Laufrollenträgern oder Tischbeinen, die mit der abnehmbaren Vorderwand oder der Rückwand verschraubt werden können. Diese sind zu diesem Zweck mit entsprechenden Schraublöchem versehen. Hierdurch ist es möglich, auf einfache Weise und mit wenigen Handgriffen aus den Seitenwänden oder Rückwänden Rollpaletten oder kleine Tische herzustellen, was beim Bühnenaufbau nützlich sein kann. Auf diese Weise werden die Teile der Transportvorrichtung als Module für andere nützliche Utensilien beim Bühnenbau verwendet.

Ein Ausführungsbeispiel der Erfindung wird im folgenden anhand der Zeichnung näher erläutert. Es zeigen:

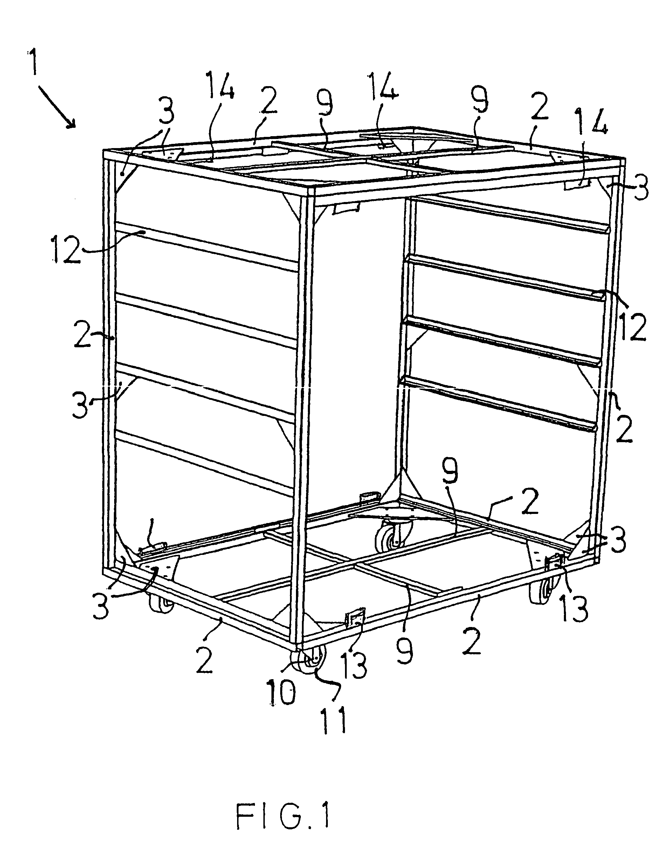

- Fig. 1:: Perspektivisch den Rahmen ohne Boden, Seitenwände, Vorderwand, Rückwand und Deckel;

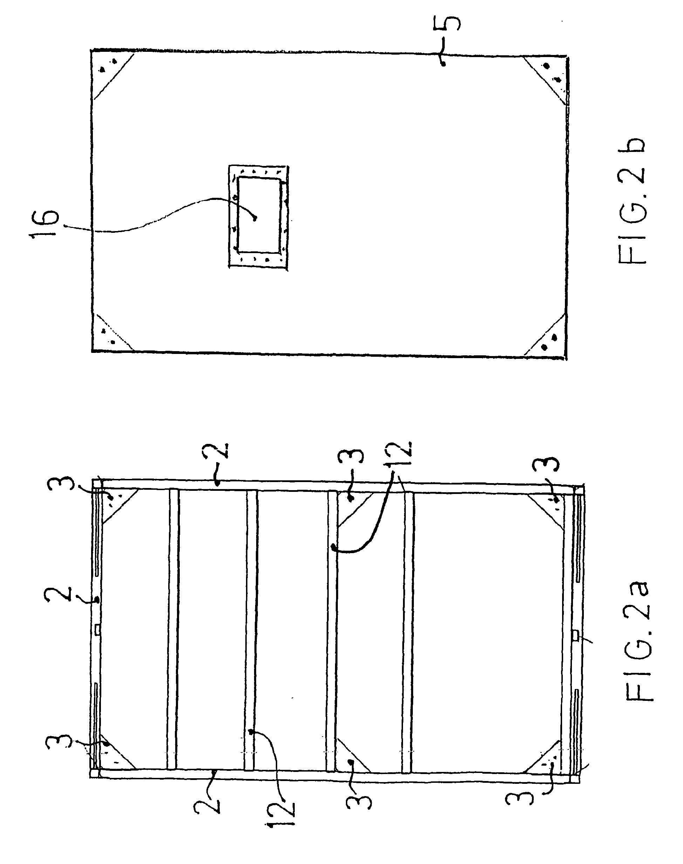

- Fig. 2a und 2b:: eine Seitenansicht zu Figur 1 ohne Laufrollen und Rollenträger sowie eine Ansicht der Seitenwand vor der Montage;

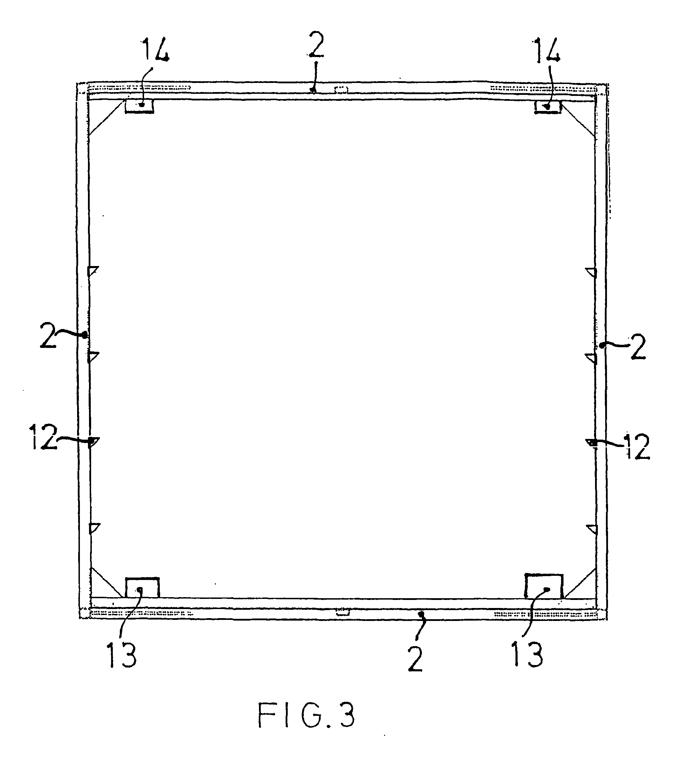

- Fig. 3:: eine Vorderansicht bzw. Rückansicht von Figur 1 ohne Laufrollen und Rollenträger;

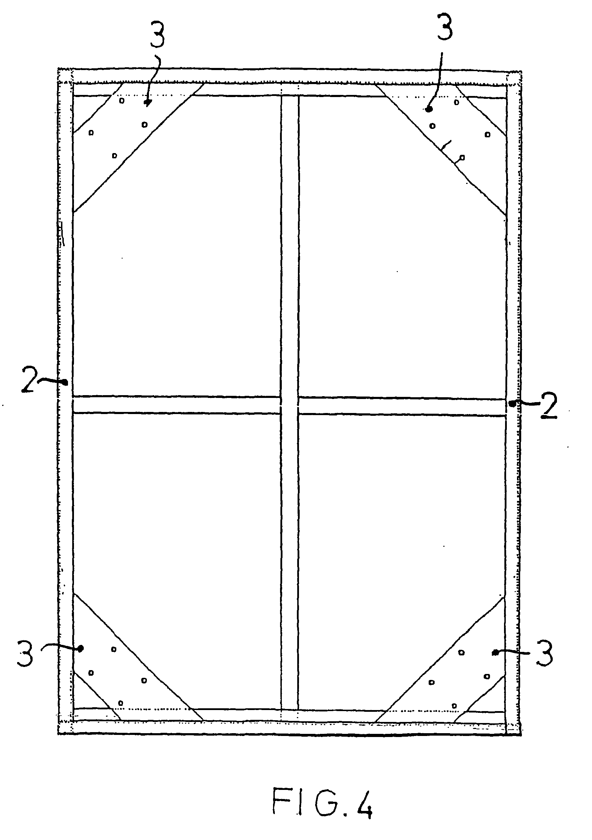

- Fig. 4:: eine Ansicht zu Figur 1 von unten ohne Laufrollen und Rollenträger;

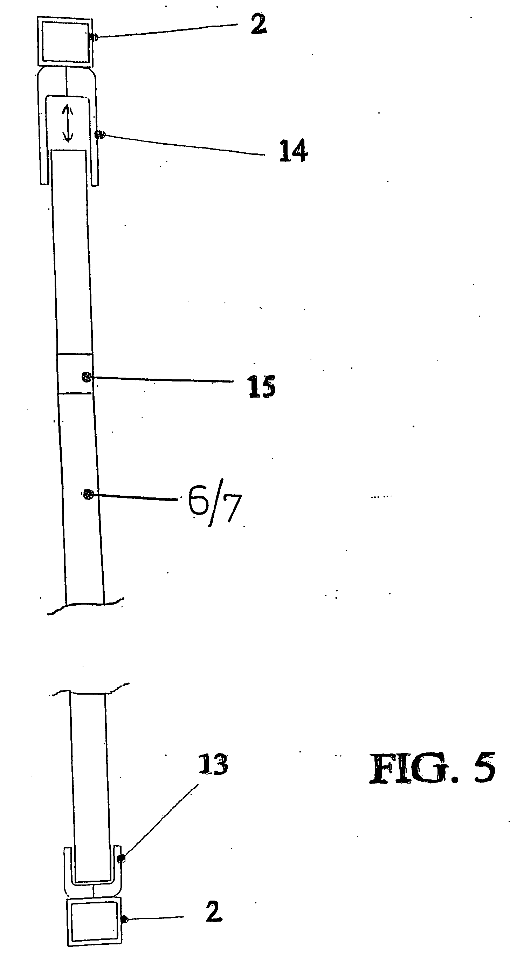

- Fig. 5:: die Befestigungsmittel für die Vorderwand bzw. die Rückwand im Schnitt;

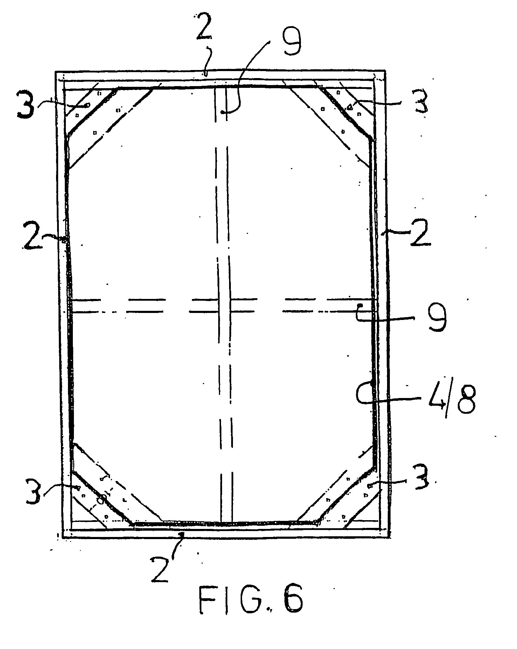

- Fig. 6:: eine Draufsicht auf den Boden bzw. den Deckel;

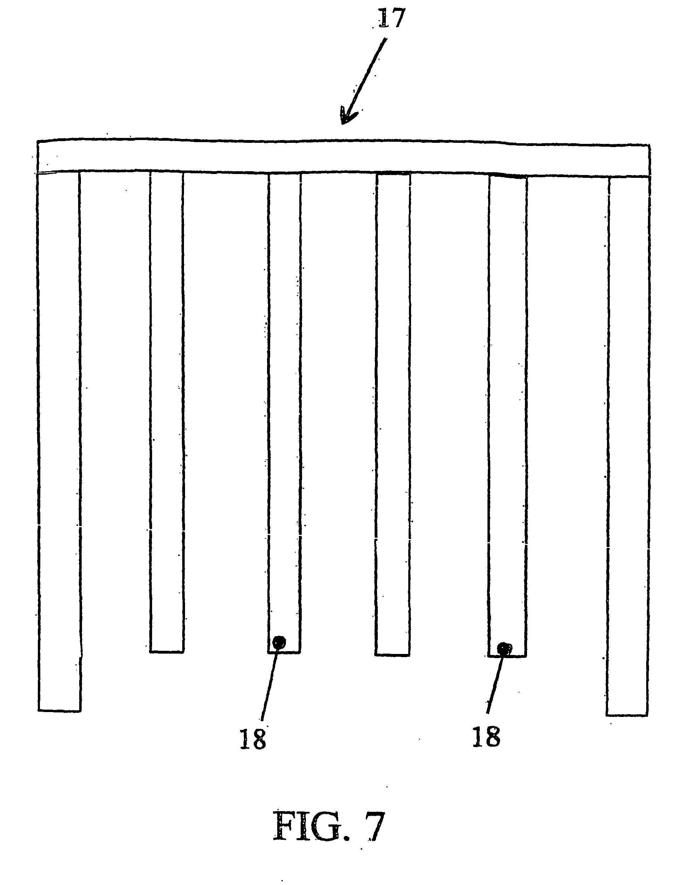

- Fig. 7:: eine perspektivische Ansicht von Sonderzubehör.

In der Zeichnung ist der Rahmen in seiner Gesamtheit mit dem Bezugszeichen 1 bezeichnet. Er besteht aus zwölf Profilstäben 2, die an ihren Enden miteinander zu dem insgesamt quaderförmigen Rahmen 1 verschweißt sind. Die einzelnen Profilstäbe bestehen aus Stahl und haben jeweils einen VierkantQuerschnitt mit abgerundeten Ecken.

In die Ecken des Rahmens 1 sind zur Versteifung Eckversteifungsbleche 3 eingeschweißt, die jeweils derart angeordnet sind, dass in den von jeweils vier Profilstäben 2 umschlossenen Aufnahmerahmen Platz für das Einsetzen eines Bodens 4, von Seitenwänden 5, von Vorderwand 6 und Rückwand 7 sowie eines Deckels 8 verbleibt. Dabei sind der Aufnahmerahmen für den Boden 4 und der Aufnahmerahmen für den Deckel 8 jeweils zusätzlich durch zwei Stützprofile 9 verstärkt, die sich über den Flächenbereich dieser beiden Aufnahmerahmen erstrecken und sich in der Mitte des jeweiligen Aufnahmerahmens kreuzen. Dabei sind diese zusätzlichen Stützprofile 9 - ebenso wie die Eckversteifungsbleche 3 - so am Rahmen 1 befestigt, dass der innerhalb des jeweiligen Aufnahmerahmens verbleibende Raum für den Einsatz von Boden 4 bzw. Deckel 8 frei bleibt. Der Boden 4 wird von oben in den zugehörigen Aufnahmerahmen eingelegt und mit Hilfe von Schrauben an den Eckversteifungsblechen 3 und/oder an den zusätzlichen Stützprofilen 9 festgeschraubt. Außerdem sind von unten an die Eckversteifungsbleche 3 vier Rollenträger 10 mit Laufrollen 11 angeschweißt. Auf diesen Laufrollen 11 kann der Behälter auf dem Boden verfahren werden.

Weiterhin sind die Aufnahmerahmen für die Seitenwände 5 mit parallel und mit Abstand zueinander verlaufenden, horizontal angeordneten L-Profilen 12 verschweißt, deren waagerecht verlaufende Schenkel in den Innenraum des Behälters ragen und als Auflageflächen für in den Innenraum des Behälters einschiebbare, in der Zeichnung nicht dargestellte Zwischenböden, Schubladen oder Sonderzubehör dienen. Auch diese L-Profile 12 sind so am Rahmen 1 angeschweißt, dass innerhalb der seitlichen Aufnahmerahmen Platz für das Einlegen der Seitenwände 5 verbleibt, die zu Ihrer Befestigung am Rahmen 1 mit den Eckversteifungsblechen 3 verschraubt werden.

Der Deckel 8 ist von oben in den oberen Aufnahmerahmen eingelegt und an den zusätzlichen Stützprofilen 9 und/oder den Eckversteifungsblechen 3 befestigt. Deckel 8 lässt allerdings an allen vier Ecken die dort befindlichen Eckversteifungsbleche 3 ganz oder teilweise frei. Diese vom Deckel 8 frei gelassenen Bereiche der Eckversteifungsbleche 3 dienen als Standfläche für die Laufrollen 11 eines darüber gestapelten Behälters, dessen Gewicht auf diese Weise lediglich den Rahmen 1, nicht aber den Deckel 8 belastet.

Der vordere und der hintere Aufnahmerahmen für die Vorderwand 6 bzw. die Rückwand 7 sind oben und unten mit zur Befestigung von Vorderwand 6 bzw. Rückwand 7 dienenden U-Profilen 13 und 14 versehen, deren freie Schenkel zur Rahmenmitte weisen. Dabei sind die freien Schenkel der oberen U-Profile 13 länger als die freien Schenkel der unteren U-Profile 14. Die Vorderwand 6 bzw. die Rückwand 7 sind so bemessen, dass ihr oberer Rand von den Schenkeln der oberen U-Profile 13 umfasst sind, wenn ihr unterer Rand auf der Basis des unteren U-Profils 14 aufliegt. In dieser Position der Vorderwand 6 bzw. der Rückwand 7 verbleibt zwischen deren Oberkante und der Basis der oberen U-Profile 13 allerdings soviel Abstand, dass die Vorderwand 6 bzw. die Rückwand 7 nach oben aus den unteren U-Profilen 14 herausgehoben werden können. Infolge dieser Abmessungsverhältnisse und Anordnung der U-Profile 13 und 14 einerseits und der Vorderwand 6 bzw. Rückwand 7 andererseits bleiben diese unter ihrem Eigengewicht in einer verriegelten Einbaustellung, aus welcher sie ohne Werkzeug nach oben herausgehoben werden können. Zur Vereinfachung ihrer Handhabung beim Ein- und Ausbau sind die Vorderwand 6 bzw. die Rückwand 7 mit entsprechenden Handeingriffsöffnungen 15 versehen.

Ähnlich sind die Seitenwände 5 mit verschließbaren Handeingriffsöffnungen 16 versehen, um den Behälter besser fassen und verschieben zu können.

In die L-Profile 12 der Seitenwände kann an Stelle der nicht dargestellten Einschubböden oder Schubfächer als Sonderzubehör auch ein Traggestell 17 eingeschoben werden, der mit parallel zueinander verlaufenden Tragstangen 18 versehen ist, an denen Kabel, Leuchten etc. aufgehängt werden können. Das Traggestell 17 kann wahlweise zwei oder vier Tragstangen 18 haben.

Gegebenenfalls können die herausnehmbare Vorderwand 6 und/oder die herausnehmbare Rückwand 7 auch mit Anschraublöchern für Laufrollenträger oder Tischbeine versehen sein. Hierdurch ist es möglich, mit geringem Aufwand die herausnehmbare Vorderwand 6 bzw. die Rückwand 7 mit wenigen Handgriffen in ein Rollbrett oder einen Tisch zu verwandeln.

## Patentansprüche

1. Vorrichtung für den Transport und/oder die Lagerung von Bühnenausrüstungen, insbesondere von veranstaltungstechnischen Materialien, bestehend aus einem auf Laufrollen (11) verfahrbaren, quaderförmigen Stapelbehälter, der einen mit Laufrollenträgern (10) verbundenen Rahmen sowie einen Boden (4), zwei Seitenwände (5), eine Vorderwand (6), eine Rückwand (7) und einen Deckel (8) aufweist, wobei der Rahmen (1) von entlang den Kanten des Behälters verlaufenden, an den Ecken des Behälters miteinander verbundenen Profilstäben (2) gebildet wird und durch in den Ecken des Rahmens eingesetzte Eckenversteifungsbleche (3) versteift ist, und die Profilstäbe jeweils Aufnahmerahmen bilden, in welche der Boden (4), die beiden Seitenwände (5), die Vorderwand (6), die Rückwand (7) und der Deckel (8) des Behälters eingesetzt sind,
**dadurch gekennzeichnet, dass** der vordere und der hintere Aufnahmerahmen für die Vorderwand (6) bzw. die Rückwand (7) oben und unten mit U-Profilen (13, 14) versehen sind, zwischen deren zur Rahmenmitte weisenden freien Schenkel die Vorderwand (6) bzw. die Rückwand (7) zum Zwecke ihrer Halterung einsetzbar sind, wobei die freien Schenkel der unteren U-Profile (14) kürzer sind als die freien Schenkel der oberen U-Profile (13).

2. Vorrichtung nach Anspruch 1, **dadurch gekennzeichnet, dass** die entlang den Kanten des Behälters verlaufenden Profilstäbe (2) des Rahmens (1) als Vierkantprofile aus Stahl mit außen abgerundeten Ecken ausgebildet sind.

3. Vorrichtung nach Anspruch 1, **dadurch gekennzeichnet, dass** die Profilstäbe (2) des Rahmens (1) an den Ecken des Behälters miteinander und mit den in den Ecken angeordneten Eckversteifungsblechen (3) verschweißt sind.

4. Vorrichtung nach Anspruch 1, **dadurch gekennzeichnet, dass** die Aufnahmerahmen für den Boden (4) und den Deckel (8) zusätzlich durch sich über den Flächenbereich des Aufnahmerahmens erstreckende Stützprofile (9) verstärkt sind.

5. Vorrichtung nach Anspruch 4, **dadurch gekennzeichnet, dass** zwei Stützprofile (9) sich in der Mitte des zugehörigen Aufnahmerahmens kreuzen.

6. Vorrichtung nach Anspruch 1, **dadurch gekennzeichnet, dass** die Aufnahmerahmen für die Seitenwände (5) mit parallel und mit Abstand zueinander verlaufenden, horizontal angeordneten L-Profilen (12) versehen sind, deren waagerecht verlaufende Schenkel als Auflageflächen für in den Behälter einsetzbare Zwischenböden, Schubladen oder Sonderzubehör dienen.

7. Vorrichtung nach Anspruch 1, **dadurch gekennzeichnet, dass** der Boden (4) die Seitenwände (5), die Vorderwand (6), die Rückwand (7) und der Deckel (8) des Behälters aus wasserbeständig ausgerüsteten Schichtholzplatten bestehen.

8. Vorrichtung nach Anspruch 1, **dadurch gekennzeichnet, dass** die in die seitlichen Aufnahmerahmen eingesetzten Seitenwände (5) und der in den unteren Aufnahmerahmen eingesetzte Boden (4) jeweils mit den Eckversteifungsblechen (3) verschraubt sind.

9. Vorrichtung nach Anspruch 1, **dadurch gekennzeichnet, dass** die Laufrollenträger (10) mit den Eckversteifungsblechen (3) des unteren Aufnahmerahmens verschraubt sind.

10. Vorrichtung nach Anspruch 1, **dadurch gekennzeichnet, dass** der von oben in den oberen Aufnahmerahmen eingesetzte Deckel (8) die Eckversteifungsbleche (3) des oberen Aufnahmerahmens ganz oder teilweise als Standfläche für die Laufrollen (11) eines darüber abgestapelten Behälters frei lässt.

11. Vorrichtung nach den Ansprüchen 1 und 8, **dadurch gekennzeichnet, dass** die Seitenwände mit verschließbaren Hand-Eingriffsöffnungen (16) versehen sind.

12. Vorrichtung nach Anspruch 6, **dadurch gekennzeichnet, dass** auf die waagerechten Schenkel der L-Profile (9) ein Traggestell (17) aufschiebbar ist, welches mit parallel zueinander verlaufenden Tragstangen (18) zum Aufhängen von Leuchten, Kabeln oder dergleichen versehen ist.

13. Vorrichtung nach Anspruch 12, **dadurch gekennzeichnet, dass** das Traggestell (17) zwei Tragstangen (18) aufweist.

14. Vorrichtung nach Anspruch 12, **dadurch gekennzeichnet, dass** das Traggestell (17) vier Tragstangen (18) aufweist.

15. Vorrichtung nach Anspruch 1, **dadurch gekennzeichnet, dass** die abnehmbare Vorderwand (6) oder Rückwand (7) mit Anschraublöchern (19) zum Befestigen von Laufrollenträgern oder Tischbeinen versehen sind.

## Claims

1. Device for transport and/or storage of stage equipent, particularly of event-technology materials, consisting of a block-shaped stacking container that can be moved on casters (11), which container has a frame connected with caster supports (10) as well as a bottom (4), two side walls (5), a front wall (5), a rear wall (7), and a lid (8), wherein the frame (1) is formed by profiled rods (2) that run along the edges of the container and are connected with one another at the corners of the container, and by means of metal corner reinforcement sheets (3) inserted into the corners of the frame, and the profiled rods form accommodation frames, in each instance, into which frames the bottom (4), the two side walls (5), the front wall (6), the rear wall (7), and the lid (8) of the container are inserted, **characterized in that** the front and the rear accommodation frame for the front wall (6) and the rear wall (7), respectively, are provided with U profiles (13,14), at the top and the bottom, between the free shanks of which, pointing to the center of the frame, the front wall (6) or the rear wall (7), respectively, can be inserted for the purpose of holding it, wherein the free shanks of the lower U profiles (14) are shorter than the free shanks of the upper U profiles (13).

2. Device according to claim 1, **characterized in that** the profiled rods (2) of the frame (1) that run along the edges of the container are configured as quadragonal profiles made of steel, with corners that are rounded off on the outside.

3. Device according to claim 1, **characterized in that** the profiled rods (2) of the frame (1) are welded to one another at the corners of the container and to the metal corner reinforcement sheets (3) disposed at the corners.

4. Device according to claim 1, **characterized in that** the accommodation frames for the bottom (4) and the lid (8) are additionally reinforced by means of support profiles (9) that extend over the surface region of the accommodation frame.

5. Device according to claim 4, **characterized in that** two support profiles (9) intersect in the center of the related accommodation frame.

6. Device according to claim 1, **characterized in that** the accommodation frames for the side walls (5) are provided with horizontally disposed L profiles (12) that run parallel to and at a distance from one another, the shanks of which, running horizontally, serve as contact surfaces for intermediate bottoms, drawers, or special accessories that can be inserted into the container.

7. Device according to claim 1, **characterized in that** the bottom (4), the side walls (5), the front wall (6), the rear wall (7), and the lid (8) of the container consist of plywood panels equipped to be water-resistant.

8. Device according to claim 1, **characterized in that** the side walls (5) inserted into the lateral accommodation frames and the bottom (4) inserted into the lower accommodation frame are screwed to the metal corner reinforcement sheets (3), in each instance.

9. Device according to claim 1, **characterized in that** the caster supports (10) are screwed to the metal corner reinforcement sheets (3) of the lower accommodation frame.

10. Device according to claim 1, **characterized in that** the lid (8), inserted into the upper accommodation frame from above, leaves the metal corner reinforcement sheets (3) of the upper accommodation frame clear, in whole or in part, as a standing surface for the casters (11) of a container stacked on top.

11. Device according to claim 1 and 8, **characterized in that** the side walls are provided with handle openings (16) that can be closed.

12. Device according to claim 6, **characterized in that** a support frame (17) can be pushed onto the horizontal shanks of the L profiles (9), which frame is provided with support rods (18) that run parallel to one another, for suspending lamps, cables, or the like.

13. Device according to claim 12, **characterized in that** the support frame (17) has four support rods (18).

14. Device according to claim 12, **characterized in that** the support frame (17) has four support rods (18).

15. Device according to claim 1, **characterized in that** the removable front wall (6) or rear wall (7) is provided with screw-on holes (19) for attaching casters supports or table legs.

## Revendications

1. Dispositif pour le transport et/ou le stockage d'équipements de scène, notamment de matériel événementiel, comprenant un contenant empilable parallélépipédique déplaçable sur des rouleaux (11) qui comporte un châssis solidaire de porte-rouleau (10) ainsi qu'un fond (4), deux parois latérales (5), une paroi avant (6), une paroi arrière (7) et un couvercle (8), le châssis (1) étant formé de profilés (2) s'étendant le long des bords du contenant et assemblés les uns aux autres aux coins du contenant, et étant rigidifié par des raidisseurs en tôle des coins (3) rapportées aux coins du châssis, et les profilés formant des cadres de réception dans lesquels le fond (4), les deux parois latérales (5), la paroi avant (6), la paroi arrière (7) et le couvercle (8) du contenant sont insérés,
**caractérisé en ce que** les cadres de réception avant et arrière respectivement pour la paroi avant (6) et la paroi arrière (7) sont pourvus de profilés en U (13, 14) entre les ailes libres desquels, qui sont orientées vers le centre de chaque cadre, peuvent être insérées respectivement la paroi avant (6) et la paroi arrière (7) pour les tenir, les ailes libres des profilés en U inférieurs (14) étant plus courtes que les ailes libres des profilés en U supérieurs (13).

2. Dispositif selon la revendication 1, **caractérisé en ce que** les profilés (2) du châssis (1) s'étendant le long des bords du contenant sont formés comme profilés à section rectangulaire en acier avec des arêtes arrondies.

3. Dispositif selon la revendication 1, **caractérisé en ce que** les profilés (2) du châssis (1) sont soudés les uns aux autres et aux raidisseurs en tôle des coins (3), aux coins du contenant.

4. Dispositif selon la revendication 1, **caractérisé en ce que** les cadres de réception pour le fond (4) et le couvercle (8) sont renforcés de plus par des profilés de support (9) s'étendant sur la surface du cadre de réception respectif.

5. Dispositif selon la revendication 4, **caractérisé en ce que** deux profilés de support (9) se croisent au milieu du cadre de réception correspondant.

6. Dispositif selon la revendication 1, **caractérisé en ce que** les cadres de réception pour les parois latérales (5) sont pourvus de profilés en L (12) disposés horizontalement et s'étendant parallèlement les uns aux autres et espacés les uns des autres, les ailes horizontales des profilés servant comme surfaces d'appui pour des fonds intermédiaires, des tiroirs ou des accessoires particuliers pouvant être insérés dans le contenant.

7. Dispositif selon la revendication 1, **caractérisé en ce que** le fond (4), les parois latérales (5), la paroi avant (6), la paroi arrière (7) et le couvercle (8) du contenant sont faits en des panneaux de bois stratifiés résistant à l'eau.

8. Dispositif selon la revendication 1, **caractérisé en ce que** les parois latérales (5) insérées dans les cadres de réception latéraux et le fond (4) inséré dans le cadre de réception inférieur sont vissés sur les raidisseurs en tôles des coins (3).

9. Dispositif selon la revendication 1, **caractérisé en ce que** les porte-rouleau (10) sont vissés sur les raidisseurs en tôle des coins (3) du cadre de réception inférieur.

10. Dispositif selon la revendication 1, **caractérisé en ce que** le couvercle (8) inséré par le haut dans le cadre de réception supérieur laisse les raidisseurs en tôle des coins (3) du cadre de réception supérieur entièrement ou partiellement libres comme surface d'appui pour les rouleaux (11) d'un contenant empilé au-dessus.

11. Dispositif selon les revendications 1 et 8, **caractérisé en ce que** les parois latérales sont pourvues d'ouvertures obturables de saisie (16) pour des mains.

12. Dispositif selon la revendication 6, **caractérisé en ce qu'**une armature support (17) peut être glissée sur les ailes horizontales des profilés en L (9), qui est pourvue de barres support (18) pour suspendre des lampes, des câbles ou des objets semblables.

13. Dispositif selon la revendication 12, **caractérisé en ce que** l'armature support (17) est pourvue de deux barres support (18).

14. Dispositif selon la revendication 12, **caractérisé en ce que** l'armature support (17) est pourvue de quatre barres support (18).

15. Dispositif selon la revendication 1, **caractérisé en ce que** la paroi avant amovible (6) ou la paroi arrière amovible (7) est pourvue de trous de vissage (19) permettant de fixer des porte-rouleau ou des pieds de table.
